# EUROPÄISCHE PATENTSCHRIFT

(11) **EP 0 505 375 B1**
(45) Veröffentlichungstag und Bekanntmachung des Hinweises auf die Patenterteilung: **29.03.1995**
(21) Anmeldenummer: 90917019.3
(22) Anmeldetag: 13.11.1990
(51) Int. Cl.: B60T 13/52

(54) **UNTERDRUCK-BREMSKRAFTVERSTÄRKER**
VACUUM BRAKE BOOSTER
SERVOFREIN A DEPRESSION

(30) Priorität: 16.12.1989 DE 3941604
(43) Veröffentlichungstag der Anmeldung: 30.09.1992
(73) Patentinhaber: ITT Automotive Europe GmbH, 60488 Frankfurt (DE)
(72) Erfinder: RÜFFER, Manfred, D-6231 Sulzbach (DE); JAKOBI, Ralf, D-6093 Flörsheim (DE); BAUER, Jürgen, D-6200 Wiesbaden (DE); KRAFT, Peter, D-3500 Kassel-Wilhelmshöhe (DE)
(86) Internationale Anmeldenummer: EP9001899
(87) Internationale Veröffentlichungsnummer: WO9108938

(56) Entgegenhaltungen:
- FR-A- 1 560 915
- FR-A- 2 149 441
- GB-A- 2 219 368

## Beschreibung

Die Erfindung betrifft einen Unterdruck-Bremskraftverstärker mit einem Verstärkergehäuse, das durch eine mit einem pneumatischen Differenzdruck beaufschlagbare axial bewegliche Wand in eine Unterdruckkammer und eine Arbeitskammer dichtend unterteilt ist, sowie mit einem den Differenzdruck steuernden, in einem Steuergehäuse angeordneten, durch einen Ventilkolben betätigbaren Steuerventil, wobei der mittels einer Kolbenstange verschiebbare Ventilkolben über eine Übersetzungsscheibe sowie eine elastische Reaktionsscheibe in kraftübertragender Verbindung mit einem Kraftabgabeglied (Druckstange) steht und durch ein mit der Kolbenstange zusammenwirkendes Vorderteil sowie eine an der Übersetzungsscheibe axial anliegende Einstellhülse gebildet ist, die relativ zueinander begrenzt axial bewegbar mittels einer Gewindeverbindung miteinander verbunden sind.

Bei der Serienfertigung von derartigen Unterdruck-Bremskraftverstärkern ist es erforderlich, den oben erwähnten Abstand, das sogenannte z-Maß, möglichst genau einzustellen, um die von der Automobilindustrie gewünschten Kennlinien zu erreichen. Das einzustellende z-Maß bestimmt dabei das Verhalten des Verstärkers in der Anfangsphase dessen Betätigung, insbesondere die Höhe des sprunghaften Anstiegs der Ausgangskraft bei der Betätigung mit einer vorher festgelegten Eingangskraft (sog. Springereffekt).

Ein Unterdruck-Bremskraftverstärker der eingangs genannten Gattung ist aus FR-A-1.560.915 bekannt. Bei dem bekannten Unterdruck-Bremskraftverstärker ist eine auf das vordere Ende des Vorderteiles des Ventilkolbens aufgeschraubte Einstellhülse mit radialem Spiel in einer zylindrischen Ausnehmung eines als Übersetzungsscheibe dienenden hülsenförmigen Teiles angeordnet, wobei zwischen dem Vorderteil und dem hülsenförmigen Teil eine Feder vorgesehen ist, die eine ständige Anlage des hülsenförmigen Teiles an einer Reaktionsscheibe sicherstellt.

Als nachteilig wird bei dem vorbekannten Unterdruck-Bremskraftverstärker die Tatsache empfunden, daß die Einstellung des vorhin erwähnten Abstandes bzw. z-Maßes nur vor dem Zusammenbau des Bremskraftverstärkers erfolgen kann, so daß die meisten, für das "Springer"-Verhalten relevanten Faktoren wie Federkräfte, Toleranzen der Reaktionsscheibe, Wirkungsgrad des Bremskraftverstärkers sowie Wirkungsgrad des dem Bremskraftverstärker nachgeschalteten Hauptzylinders nicht berücksichtigt werden können.

Ein weiterer Nachteil kann in der Notwendigkeit gesehen werden, daß alle z-Maß-relevanten Maße der Einzelteile (Ventilkolben, Reaktions- und Übersetzungsscheibe) sehr eng toleriert werden müssen. Weniger vorteilhaft ist schließlich auch die verhältnismäßig hohe Ausschußquote, verursacht durch falsch eingestellte Geräte.

Es ist daher Aufgabe der vorliegenden Erfindung, einen Unterdruck-Bremskraftverstärker der eingangs genannten Gattung, sowie ein Verfahren zur Einstellung dessen z-Maßes anzugeben, die bei erheblicher Senkung der Montagekosten sowie der Ausschußquote eine Realisierung eines engeren, vorher festgelegten Bereichs der Ausgangskraftwerte ermöglichen.

Diese Aufgabe wird erfindungsgemäß dadurch gelöst, daß die Einstellhülse mit ihrem dem Vorderteil abgewandten Ende an der Übersetzungsscheibe anliegt und im Steuergehäuse verdrehgesichert geführt ist, so daß eine Änderung der axialen Länge des Ventilkolbens bei zusammengebautem Bremskraftverstärker möglich ist, wobei verfahrensmäßig vorgesehen ist, daß die Unterdruckkammer des Unterdruck-Bremskraftverstärkers an eine Unterdruckquelle angeschlossen wird, derart, daß im Verstärkergehäuse der Betriebsdruck herrscht, der in der Ruhestellung des Unterdruck-Bremskraftverstärkers auftritt, wonach auf den Ventilkolben eine vorher festgelegte Eingangskraft bei gleichzeitiger Messung der Ausgangskraft übertragen wird, und, wenn der ermittelte Wert der Ausgangskraft außerhalb eines vorher festgelegten Bereichs liegt, die axiale Länge des Ventilkolbens solange geändert wird, bis der vorher festgelegte Ausgangskraftbereich erreicht wird.

Die Änderung der Ventilkolbenlänge erfolgt dabei vorzugsweise durch Drehen des Vorderteiles gegenüber der Einstellhülse, wobei nach dem Erreichen des gewünschten Ausgangskraftbereiches Vorderteil und Einstellhülse in der eingestellten Lage fixiert werden.

Eine zweite Lösung der der Erfindung zugrundeliegenden Aufgabe sieht bei einem Unterdruck-Bremskraftverstärker, dessen Ventilkolben durch ein mit der Kolbenstange zusammenwirkendes Vorderteil sowie ein an der Reaktionsscheibe axial anliegendes zweites Teil gebildet ist, das einen an einer am Vorderteil ausgebildeten Ringfläche axial anliegenden Absatz aufweist, vor, daß das zweite Teil durch einen im Vorderteil abgedichtet geführten Kraftübertragungsbolzen gebildet ist, der an seinem der Kolbenstange zugewandten Ende mit einer axialen, im Querschnitt V-förmigen Aussparung versehen ist, die das Ende der Kolbenstange aufnimmt.

Das Verfahren zur Einstellung eines derart aufgebauten Bremskraftverstärkers sieht vor, daß
a) auf das Vorderteil eine vorher festgelegte Eingangskraft übertragen wird;
b) die erforderliche Länge des Kraftübertragungsbolzens durch Messen des Abstandes dessen Anlagefläche (Ringfläche) am Vorderteil von der Übersetzungsscheibe bei Erreichen eines vorher festgelegten Ausgangskraftbereiches ermittelt wird und anschließend
c) ein Kraftübertragungsbolzen mit einer entsprechenden Länge unter gleichzeitiger Abdichtung eingeführt wird.

Weitere Einzelheiten und vorteilhafte Merkmale der Erfindung gehen aus den Unteransprüchen und der folgenden Beschreibung von zwei Ausführungsbeispielen im Zusammenhang mit der beiliegenden Zeichnung hervor. Dabei zeigt:
- Fig. 1: einen erfindungsgemäß aufgebauten Unterdruck-Bremskraftverstärker im axialen Teilschnitt,
- Fig. 2: den zentralen Bereich der Steuergruppe des erfindungsgemäßen Unterdruck-Bremskraftverstärkers bei der Einstellung;
- Fig. 3: die Steuergruppe nach Fig. 2 nach der Einstellung des z-Maßes;
- Fig. 4: eine andere Ausführungsvariante der Steuergruppe nach der Einstellung;
- Fig. 5: eine schematische Darstellung einer bei der Einstellung des z-Maßes verwendeten Meßeinrichtung;
- Fig. 6: eine dritte Ausführungsvariante der Steuergruppe nach der Einstellung unter Verwendung der Meßeinrichtung nach Fig. 5.

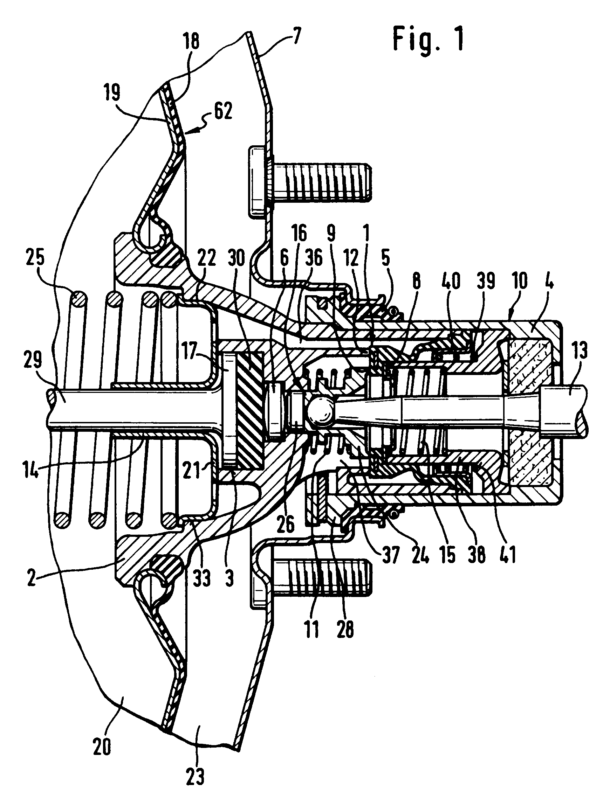

Das Gehäuse des in Fig. 1 gezeigten Unterdruck-Bremskraftverstärkers besteht aus zwei an einer Verbindungsstelle miteinander lancierten Gehäuseteilen, von denen, der besseren Übersichtlichkeit wegen, nur das bremspedalseitige Gehäuseteil 7 teilweise dargestellt ist. Der Innenraum des Gehäuses wird durch eine bewegliche Wand 62 in eine Unterdruckkammer 20, die über einen pneumatischen Anschluß mit einer Unterdruckquelle verbunden ist (nicht näher dargestellt), und eine Arbeitskammer 23 unterteilt.

Die durch einen metallischen Membranteller 19 sowie eine in der Arbeitskammer 23 daran anliegende Rollmembran 18 gebildete bewegliche Wand 62 ist an einem ersten Teil 2 eines im dargestellten Beispiel zweiteilig ausgeführten Steuergehäuses 10 befestigt, dessen zweites Teil 4 mit einem Gleitführungsring 5 die Arbeitskammer 23 nach außen hin abdichtet.

Im Inneren des Steuergehäuses 10 ist eine aus Kolbenstange 13 und Ventilkolben 16 zusammengesetzte Steuerstange axial verschiebbar angeordnet, die über einen nicht näher dargestellten Gabelkopf mit einem Bremspedal eines Kraftfahrzeuges verbindbar ist. Das Steuergehäuse 10 enthält ferner eine Ventilanordnung 1,9,12, die von dem Ventilkolben 16 betätigt wird und über Kanäle 36,37 die Druckdifferenz zwischen Unterdruckkammer 20 und Arbeitskammer 23 steuert. Das in der Unterdruckkammer 20 angeordnete erste Steuergehäuseteil 2 weist ferner eine Stufenbohrung 3 auf, in der eine Reaktionsscheibe 30 sowie ein Kopfflansch 17 einer Druckstange 29 angeordnet sind, die einen an der Stirnseite des Verstärkergehäuses befestigten, nicht näher dargestellten Hauptbremszylinder betätigt.

Zum Zurückstellen der beweglichen Wand 62 ist eine Rückstellfeder 25 vorgesehen, die zwischen dem ersten Steuergehäuseteil 2 und dem Boden des Verstärkergehäuses eingespannt ist.

Die Steuerbaugruppe des Unterdruck-Bremskraftverstärkers ist in der Bereitschaftsstellung dargestellt, d. h. in einer Stellung, in der die beiden Kammern 20,23 voneinander getrennt sind. In dieser Stellung liegen nämlich die beiden Dichtsitze 9,12 an der Dichtfläche eines Tellerventils 1 an, das auf seiner der Dichtfläche abgewandten Seite einen Anschlag 8 aufweist, der über eine Hülse 38 am zweiten Steuergehäuseteil 4 anschlägt. Das zweite Steuergehäuseteil 4 liegt mit seinem Kragen 28 am Gleitführungsring 5 an, wobei der Dichtsitz 9 am Ventilkolben 16 von einer Kolbenstangenrückholfeder 11 gegen die Dichtfläche des Tellerventils 1 gedrückt wird. Das Tellerventil 1 wird gleichzeitig in Richtung auf die beiden Dichtsitze 9,12 zu mittels einer Druckfeder 15 vorgespannt, die sich mit deren anderem Ende an der Hülse 38 abstützt. Außerdem ist eine zweite Druckfeder 39 vorgesehen, die sich einerseits an einer Führung 40 des Tellerventils 1 und andererseits an einer ringförmigen Fläche 41 der Hülse 38 abstützt und die beiden Steuergehäuseteile 2,4 auseinander hält.

Um eine präzise Führung der Druckstange 29 zu erzielen, ist eine Führungshülse 14 vorgesehen, deren radialer Flansch 21 sich an einer Ringfläche am ersten Steuergehäuseteil 2 abstützt und in eine zylindrische Führungsfläche 22 übergeht, die mit einem am ersten Steuergehäuseteil 2 ausgebildeten zylindrischen Abschnitt 33 zusammenwirkt, so daß die auf die Druckstange 29 einwirkenden Biegekräfte wirksam aufgenommen werden. Der im Bereich der Mündung des Unterdruckkanals 36 mit mehreren Öffnungen versehene radiale Flansch 21 wird gegen Herausfallen durch die Rückstellfeder 25 gesichert, die sich an einem an die zylindrische Führungsfläche 22 anschließenden radialen, näher nicht bezeichneten Kragen abstützt.

Die Reaktionsscheibe 30 befindet sich dabei in einem der Unterdruckkammer 20 zugewandten Abschnitt der Stufenbohrung 3, wobei in deren zweitem Abschnitt kleineren Durchmessers eine Übersetzungsscheibe 6 angeordnet ist, die mit dem Ventilkolben 16 zusammenwirkt und deren mit der Reaktionsscheibe 30 in Berührung stehende Fläche die Übersetzung des Bremsgerätes bestimmt. Der Abstand z zwischen der Übertragungsscheibe 6 und der Reaktionsscheibe 30 stellt ein funktionswichtiges Maß des Bremskraftverstärkers dar, dessen Bedeutung im nachfolgenden Text näher erläutert wird.

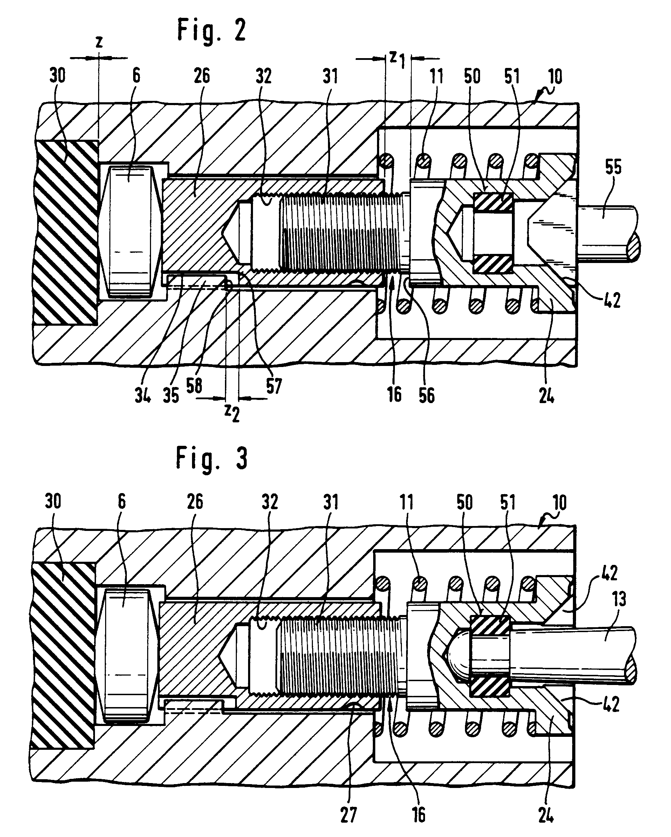

Wie insbesondere den Figuren 2 bis 4 zu entnehmen ist, ist der Ventilkolben 16 des erfindungsgemäß aufgebauten Bremskraftverstärkers zweiteilig ausgebildet und besteht vorzugsweise aus einem den Dichtsitz 9 tragenden Vorderteil 24 sowie aus einer an der Übersetzungsscheibe 6 axial anliegenden Einstellhülse 26, die im Steuergehäuse 10 verdrehgesichert geführt ist. Die Verdrehsicherung kann beispielsweise als eine Längsnut 34 in der Einstellhülse 26 ausgebildet sein, die mit einem am Steuergehäuse 10 angeformten Steg 35 zusammenwirkt. Denkbar sind jedoch auch andere Varianten, wie z.B. Abflachungen, Vierkantprofile und dgl..

Um eine Relativbewegung zwischen dem Vorderteil 24 und der Einstellhülse 26 in axialer Richtung zum Zweck der Einstellung des oben erwähnten Abstandes z zu ermöglichen ist zwischen den beiden Teilen eine Gewindeverbindung vorgesehen, die durch ein Außengewinde 31 am Vorderteil 24 und ein Innengewinde 32 in der Einstellhülse 26 gebildet ist. Um die Kolbenstange 13 nach dem beendeten Einstellvorgang montieren zu können, ist im Vorderteil 24 eine radiale Nut 50 vorgesehen, die einen vorzugsweise aus elastischem Material bestehenden ringförmigen Kolbenstangenhalter 51 aufnimmt.

Bei der Einstellung des gewünschten Abstandes z, im dargestellten Beispiel z = o, wird das Verstärkergehäuse des erfindungsgemäßen Unterdruck-Bremskraftverstärkers an eine nicht gezeigte Unterdruckquelle angeschlossen, derart, daß im Verstärkergehäuse der Betriebsdruck herrscht, der in der Ruhestellung des Unterdruck-Bremskraftverstärkers auftritt. Danach wird ein Einstellwerkzeug 55 in im Vorderteil 24 dafür vorgesehene Schlitze 42 eingeführt, das eine vorher festgelegte Eingangskraft, beispielsweise 300 N, auf das Vorderteil 24 überträgt. Dadurch wird das Vorderteil 24 im Sinne der Belüftung der Arbeitskammer 23 verschoben, so daß eine Verstärkungskraft aufgebaut wird, die zur am Vorderteil 24 eingeleiteten Eingangskraft hinzuaddiert und an der Druckstange 29 als Ausgangskraft gemessen wird.

Ergibt die Messung, daß der Ausgangskraftwert außerhalb eines vorher festgelegten Bereichs - Streubands - liegt, so ist eine entsprechende Korrektur des z-Maßes erforderlich, bei deren Durchführung die relative Lage der Einstellhülse 26 und des Vorderteils 24 durch Drehen des Vorderteils 24 so lange geändert wird, bis ein innerhalb des gewünschten Streubands liegender Ausgangskraftwert erreicht ist. Das diesem Wert entsprechende z-Maß kann um den Wert z₁ (Abstand zwischen einer am Vorderteil 24 ausgebildeten Ringfläche 56 und dem der Übersetzungsscheibe 6 abgewandten Ende der Einstellhülse 26) bzw. z₂ (Abstand zwischen einer an der Einstellhülse 26 ausgebildeten Stufe 57 von einem am Steuergehäuse 10 vorgesehenen Anschlag 58) verändert werden. Ist das gewünschte z-Maß eingestellt, so wird das Einstellwerkzeug 55 zurückgezogen und die Kolbenstange 13 in das Vorderteil 26 eingepreßt (Fig. 3). Es ist auch denkbar, die Einstellhülse 26 mit der Übersetzungsscheibe 6 einteilig auszuführen.

Ein ungewolltes Verdrehen von Vorderteil 24 und Einstellhülse 26 kann dadurch verhindert werden, daß die Gewindeverbindung 31,32 mit einer Losdrehsicherung versehen ist. Derartige Maßnahmen bestehen z. B. darin, daß die Gewindeverbindung als selbsthemmendes Gewinde ausgeführt ist, d.h. die Gewinde 31,32 des Vorderteils 24 bzw. die Einstellhülse 26 weisen unterschiedliche Steigungen bzw. Flankenwinkel auf. Es ist auch denkbar, die Einstellhülse 26 mit radialen Eindrückungen 27 (Fig. 3) zu versehen bzw. sie als selbstsichernde Mutter auszubilden. Schließlich kann die Gewindeverbindung 31,32 mit mikroverkapseltem Klebstoff oder mit einer Lacksicherung versehen sein.

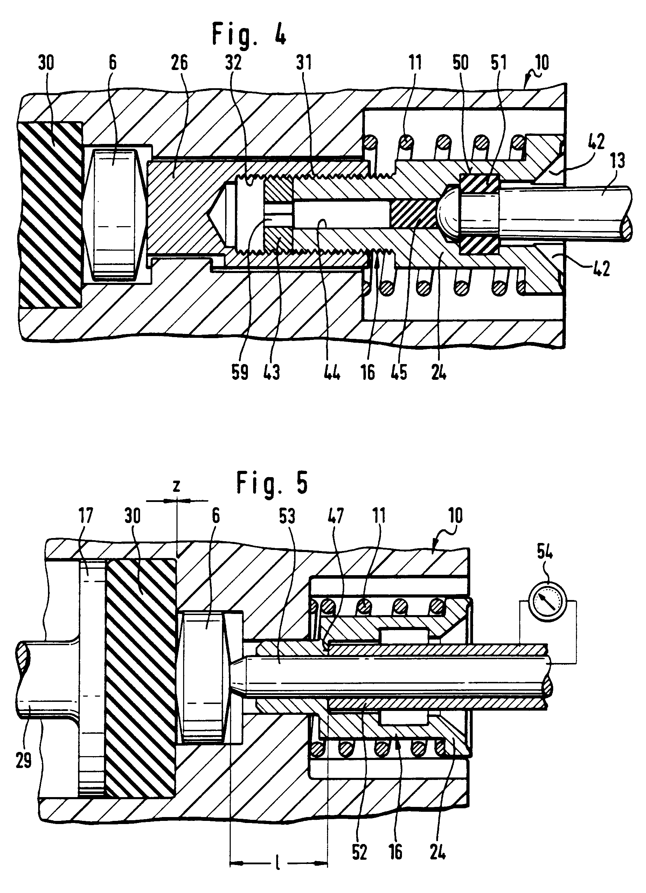

Bei der in Fig. 4 gezeigten Ausführungsvariante der erfindungsgemäßen Steuergruppe weist das Vorderteil 24 eine durchgehende axiale Bohrung 44 auf. Als Losdrehsicherung zwischen dem Vorderteil 24 und der Einstellhülse 26 dient eine ins Innengewinde 32 der Einstellhülse 26 eingeschraubte Kontermutter 43, die in ihrer Mitte eine Schlüsselaufnahme 59, beispielsweise eine Vierkantöffnung, aufweist und die eingestellte Lage des Vorderteils 24 gegenüber der Einstellhülse 26 fixiert, indem sie sich am Ende des Vorderteils 24 axial abstützt. Um die Kontermutter 43 anziehen zu können wird ein nicht gezeigter Schlüssel durch die Bohrung 44 in die Schlüsselaufnahme 59 eingeführt, nach dessen Herausziehen (Einstellvorgang beendet) die Bohrung 44 mittels eines Dichtstopfens 45 luftdicht verschlossen wird.

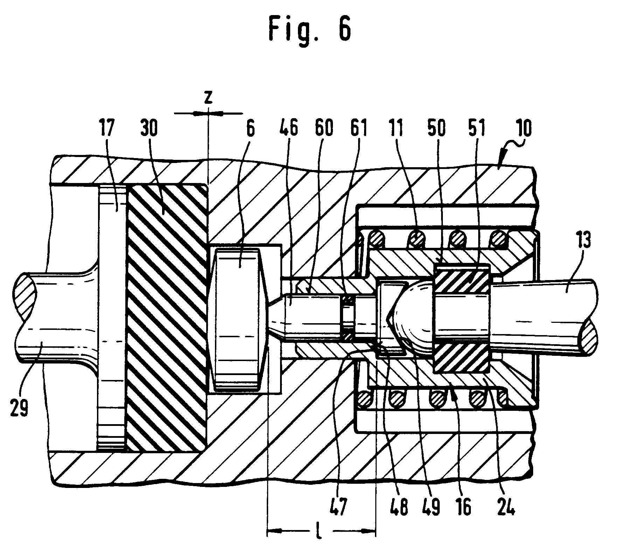

Bei der in Fig. 5 und 6 gezeigten Steuergruppe erfolgt die Einstellung des gewünschten z-Maßes - im Gegensatz zu den vorhin erwähnten Ausführungsmöglichkeiten - durch Einlegen von Kraftübertragungsbolzen 46 unterschiedlicher Länge l, die mittels einer Meßvorrichtung ermittelt wird. Über die aus einer sich an der Übersetzungsscheibe 6 bei der Ermittelung der gewünschten Länge l abstützenden Stange 53 sowie einer die Stange 53 umgreifenden bzw. führenden, sich am Vorderteil 24 abstützenden Hülse 52 bestehende Meßvorrichtung wird nach dem Evakuieren des Verstärkergehäuses die vorgewählte Eingangskraft eingeleitet, deren eine auf das Vorderteil 24 über dessen Ringfläche 47 einwirkende Komponente das Vorderteil 24 im Sinne der Belüftung der Arbeitskammer 23 verschiebt, während die zweite Komponente über die Stange 53 auf die Übersetzungsscheibe 6 direkt übertragen wird. Gleichzeitig erfolgt, wie vorhin erwähnt, die Messung der Ausgangskraft. Nachdem der vorher festgelegte Ausgangskraftbereich erreicht wurde, wird mittels einer an die Meßvorrichtung angeschlossenen Meßuhr 54 der bei der Relativbewegung der Hülse 52 gegenüber der Stange 53 zurückgelegte Weg bzw. der Abstand zwischen der Ringfläche 47 am Vorderteil 24 und dem Auflagepunkt der Stange 53 an der Übersetzungsscheibe 6 ermittelt. Das so ermittelte Maß l stellt die erforderliche Länge l des Kraftübertragungsbolzens 46 dar, der in eine axiale Bohrung 60 des Vorderteils 24 unter Abdichtung mittels eines O-Ringes 61 eingeschoben wird und im eingebauten Zustand mit einem Absatz 48 an der Ringfläche 47 axial anliegt. Nach der Montage des Kraftübertragungsbolzens 46 werden die Kolbenstange 13 mit dem Kolbenstangenhalter 51 montiert, wobei das halbkugelförmig ausgebildete Ende der Kolbenstange 13 in einer im Querschnitt V-förmigen Ausnehmung 49 des Kraftübertragungsbolzens 46 aufgenommen wird.

Anstatt der Kraftübertragungsbolzen 46 unterschiedlicher Länge l können auch zweiteilige Bolzen verwendet werden, die außerhalb des Gerätes auf die vorher ermittelte Länge eingestellt werden. Um eine Änderung der eingestellten Länge zu verhindern, können z.B. zwischen den beiden Teilen des Kraftübertragungsbolzens ein Gewinde mit Einscheren oder ein Schweißpunkt vorgesehen sein.

### Bezugszeichenliste

- 1: Tellerventil
- 2: erstes Steuergehäuse
- 3: Bohrung
- 4: zweites Steuergehäuse
- 5: Gleitführungsring
- 6: Übersetzungsscheibe
- 7: Verstärkergehäuseteil
- 8: Anschlagfläche
- 9: Dichtsitz
- 10: Steuergehäuse
- 11: Feder
- 12: Dichtsitz
- 13: Kolbenstange
- 14: Führungshülse
- 15: Feder
- 16: Steuerventilkolben
- 17: Kopfflansch
- 18: Rollmembran
- 19: Membranteller
- 20: Unterdruckkammer
- 21: Flansch
- 22: Führungsfläche
- 23: Arbeitskammer
- 24: Vorderteil
- 25: Rückstellfeder
- 26: Einstellhülse
- 27: Eindrückung
- 28: Kragen
- 29: Druckstange
- 30: Reaktionsscheibe
- 31: Gewinde
- 32: Gewinde
- 33: Abschnitt
- 34: Nut
- 35: Steg
- 36: Kanal
- 37: Kanal
- 38: Hülse
- 39: Druckfeder
- 40: Führung
- 41: Fläche
- 42: Schlitz
- 43: Kontermutter
- 44: Bohrung
- 45: Dichtstopfen
- 46: Kraftübertagungsbolzen
- 47: Ringfläche
- 48: Absatz
- 49: Aussparung
- 50: Nut
- 51: Kolbenstangenhalter
- 52: Hülse
- 53: Stange
- 54: Meßuhr
- 55: Einstellwerkzeug
- 56: Ringfläche
- 57: Stufe
- 58: Anschlag
- 59: Schlüsselaufnahme
- 60: Bohrung
- 61: O-Ring
- 62: bewegliche Wand

## Patentansprüche

1. Unterdruck-Bremskraftverstärker mit einem Verstärkergehäuse (7), das durch eine mit einem pneumatischen Differenzdruck beaufschlagbare axial bewegliche Wand (62) in eine Unterdruckkammer (20) und eine Arbeitskammer (23) dichtend unterteilt ist, sowie mit einem den Differenzdruck steuernden, in einem Steuergehäuse (10) angeordneten, durch einen Ventilkolben (16) betätigbaren Steuerventil (1,9,12), wobei der mittels einer Kolbenstange (13) verschiebbare Ventilkolben (16) über eine Übersetzungsscheibe (6) sowie eine elastische Reaktionsscheibe (30) in kraftübertragender Verbindung mit einem Kraftabgabeglied (Druckstange 29) steht und durch ein mit der Kolbenstange (13) zusammenwirkendes Vorderteil (24) sowie eine an der Übersetzungsscheibe (6) axial anliegende Einstellhülse (26) gebildet ist, die relativ zueinander begrenzt axial bewegbar mittels einer Gewindeverbindung (31,32) miteinander verbunden sind, dadurch **gekennzeichnet**, daß die Einstellhülse (26) mit ihrem dem Vorderteil (24) abgewandten Ende an der Übersetzungsscheibe (6) anliegt und im Steuergehäuse (10) verdrehgesichert geführt ist, so daß eine Änderung der axialen Länge des Ventilkolbens (16) bei zusammengebautem Bremskraftverstärker möglich ist.

2. Unterdruck-Bremskraftverstärker nach Anspruch 1, dadurch **gekennzeichnet**, daß die Einstellhülse (26) eine axial verlaufende Nut (34) aufweist, die einen am Steuergehäuse (10) ausgebildeten Steg (35) aufnimmt.

3. Unterdruck-Bremskraftverstärker nach Anspruch 1, dadurch **gekennzeichnet**, daß die Einstellhülse (26) eine Abflachung aufweist, die mit einer am Steuergehäuse (10) ausgeformten Fläche zusammenwirkt.

4. Unterdruck-Bremskraftverstärker nach Anspruch 1, dadurch **gekennzeichnet**, daß die Einstellhülse (26) als Vierkantprofil ausgebildet ist, das in einer im Steuergehäuse (10) angeformten Vierkantöffnung aufgenommen wird.

5. Unterdruck-Bremskraftverstärker nach Anspruch 1, dadurch **gekennzeichnet**, daß die Gewindeverbindung (31,32) mit einer Losdrehsicherung versehen ist.

6. Unterdruck-Bremskraftverstärker nach Anspruch 1, dadurch **gekennzeichnet**, daß die Gewindeverbindung (31,32) als selbsthemmendes Gewinde ausgeführt ist.

7. Unterdruck-Bremskraftverstärker nach Anspruch 6, dadurch **gekennzeichnet**, daß das Vorderteil (24) und die Einstellhülse (26) mit Gewinden (31,32) unterschiedlicher Steigung versehen sind.

8. Unterdruck-Bremskraftverstärker nach Anspruch 6, dadurch **gekennzeichnet**, daß das Vorderteil (24) und die Einstellhülse (26) mit Gewinden (31,32) mit unterschiedlichen Flankenwinkeln versehen sind.

9. Unterdruck-Bremskraftverstärker nach Anspruch 5, dadurch **gekennzeichnet**, daß die Einstellhülse (26) mit radialen Eindrückungen (27) versehen ist.

10. Unterdruck-Bremskraftverstärker nach Anspruch 5, dadurch **gekennzeichnet**, daß die Einstellhülse (26) als selbstsichernde Mutter ausgebildet ist.

11. Unterdruck-Bremskraftverstärker nach Anspruch 5, dadurch **gekennzeichnet**, daß die Gewindeverbindung (31,32) mit mikroverkapseltem Klebstoff versehen ist.

12. Unterdruck-Bremskraftverstärker nach Anspruch 5, dadurch **gekennzeichnet**, daß die Gewindeverbindung (31,32) mit einer Lacksicherung versehen ist.

13. Unterdruck-Bremskraftverstärker nach Anspruch 5, dadurch **gekennzeichnet**, daß die Losdrehsicherung als eine am Vorderteil (24) axial abgestützte Kontermutter (43) ausgebildet ist.

14. Unterdruck-Bremskraftverstärker nach Anspruch 13, dadurch **gekennzeichnet**, daß das Vorderteil (24) mit einer axialen, durch einen Dichtstopfen (45) verschließbaren durchgehenden Bohrung (44) versehen ist.

15. Unterdruck-Bremskraftverstärker nach Anspruch 1, dadurch **gekennzeichnet**, daß die Einstellhülse (26) mit der Übersetzungsscheibe (6) einteilig ausgebildet ist.

16. Unterdruck-Bremskraftverstärker nach Anspruch 1, dadurch **gekennzeichnet**, daß das Vorderteil (24) des Ventilkolbens (16) an seinem der Kolbenstange (13) zugewandten Ende mit Schlitzen (42) bzw. Aussparungen versehen ist, die zur Aufnahme eines zu dessen Verdrehen bestimmten Einstellwerkzeuges (55) dienen.

17. Unterdruck-Bremskraftverstärker mit einem Verstärkergehäuse (7), das durch eine mit einem pneumatischen Differenzdruck beaufschlagbare, axial bewegliche Wand (62) in eine Unterdruckkammer (20) und eine Arbeitskammer (23) dichtend unterteilt ist, sowie mit einem den Differenzdruck steuernden, in einem Steuergehäuse (10) angeordneten, durch einen Ventilkolben (16) betätigbaren Steuerventil (1,9,12), wobei der mittels einer Kolbenstange (13) verschiebbare Ventilkolben (16) über eine Übersetzungsscheibe (6) sowie eine elastische Reaktionsscheibe (30) in kraftübertragender Verbindung mit einem Kraftabgabeglied (Druckstange 29) steht und durch ein mit der Kolbenstange (13) zusammenwirkendes Vorderteil (24) sowie ein an der Reaktionsscheibe (30) axial anliegendes zweites Teil (46) gebildet ist, das einen an einer am Vorderteil (24) ausgebildeten Ringfläche (47) axial anliegenden Absatz (48) aufweist, dadurch **gekennzeichnet**, daß das zweite Teil durch einen im Vorderteil (24) abgedichtet geführten Kraftübertragungsbolzen (46) gebildet ist, der an seinem der Kolbenstange (13) zugewandten Ende mit einer axialen, im Querschnitt V-förmigen Aussparung (49) versehen ist, die das Ende der Kolbenstange (13) aufnimmt.

18. Unterdruck-Bremskraftverstärker nach Anspruch 17, dadurch **gekennzeichnet**, daß der Kraftübertragungsbolzen (46) so ausgebildet ist, daß dessen axiale Länge vor dem Einbau veränderbar ist.

19. Unterdruck-Bremskraftverstärker nach einem der Ansprüche 1 bis 18, dadurch **gekennzeichnet**, daß das Vorderteil (24) eine radiale Nut (50) aufweist, die einen elastischen ringförmigen Kolbenstangenhalter (51) aufnimmt.

20. Verfahren zur Einstellung des axialen Abstandes zwischen der Übersetzungsscheibe (6) und der Reaktionsscheibe (30) bei einem Unterdruckbremskraftverstärker nach einem der vorhergehenden Ansprüche 1 bis 16, dadurch **gekennzeichnet**, daß
a) die Unterdruckkammer (20) an eine Unterdruckquelle angeschlossen wird, derart, daß im Verstärkergehäuse (7) der Betriebsdruck herrscht, der in der Ruhestellung des Unterdruck-Bremskraftverstärkers auftritt, wonach
b) auf den Ventilkolben (16) eine vorher festgelegte Eingangskraft bei gleichzeitiger Messung der Ausgangskraft übertragen wird und
c) wenn der ermittelte Wert der Ausgangskraft außerhalb eines vorher festgelegten Bereichs liegt, die axiale Länge des Ventilkolbens (16) solange geändert wird, bis der vorher festgelegte Ausgangskraftbereich erreicht wird.

21. Verfahren nach Anspruch 20, dadurch **gekennzeichnet**, daß die Änderung der Länge des Ventilkolbens (16) durch eine Relativbewegung dessen Teile (24,26) zueinander, insbesondere durch Drehen des Vorderteils (24) gegenüber der Einstellhülse (26) erfolgt, und daß nach dem Erreichen des Ausgangskraftbereiches Vorderteil (24) und Einstellhülse (26) in der eingestellten Lage fixiert werden.

22. Verfahren nach Anspruch 21, dadurch **gekennzeichnet**, daß das Vorderteil (24) bei nicht eingebauter Kolbenstange (13) verdreht wird.

23. Verfahren zur Einstellung des axialen Abstandes zwischen der Übersetzungsscheibe und der Reaktionsscheibe bei einem Unterdruck-Bremskraftverstärker nach Anspruch 17 oder 18, dessen Unterdruckkammer mit einem Unterdruck beaufschlagt wird und die Arbeitskammer bei gleichzeitiger Messung der Ausgangskraft belüftet wird, dadurch **gekennzeichnet**, daß
a) auf das Vorderteil (24) eine vorher festgelegte Eingangskraft übertragen wird;
b) die erforderliche Länge des Kraftübertragungsbolzens (46) durch Messen des Abstandes (l) dessen Anlagefläche (Ringfläche (47)) am Vorderteil (24) von der Übersetzungsscheibe (6) bei Erreichen eines vorher festgelegten Ausgangskraftbereiches ermittelt wird und anschließend
c) der Kraftübertragungsbolzen (46) mit einer entsprechenden Länge unter gleichzeitiger Abdichtung eingeführt wird.

24. Verfahren nach Anspruch 23, dadurch **gekennzeichnet**, daß die erforderliche Länge des Kraftübertragungsbolzens (46) durch Einführen einer Meßvorrichtung ermittelt wird, die durch eine Hülse (52) sowie eine relativ zur Hülse (52) bewegliche Stange (53) gebildet ist, wobei durch die Relativbewegung von Hülse (52) und Stange (53) zueinander unter Wirkung der Eingangskraft die Hülse (52) in Eingriff mit dem Vorderteil (24) und die Stange (53) mit der Übertragungsscheibe (6) in Berührung gebracht wird und der bei der Relativbewegung der Hülse (52) gegenüber der Stange (53) zurückgelegte Weg mittels einer Meßuhr (54) ermittelt wird.

25. Verfahren nach Anspruch 23 oder 24, dadurch **gekennzeichnet**, daß die axiale Länge (l) des Kraftübertragungsbolzens (46) vor dessen Einführung eingestellt wird.

## Claims

1. A vacuum brake power booster with a booster housing (7), which is divided into a sealed vacuum chamber (20) and a working chamber (23) by an axially movable wall (62) to which a pneumatic pressure differential can be applied, and with a control valve (1, 9, 12) which controls the pressure differential, is positioned within a control housing (10) and is actuatable by a valve piston (16), the valve piston (16) which is slidable by means of a piston rod (13) being in force-transmitting connection, through a transmission ratio disc (6) and an elastic reaction disc (30), with a force output member (push rod 29), and being formed by a front part (24), interacting with the piston rod (13), and an adjustment bushing (26) axially abutting on the transmission ratio disc (6) which are axially movable within limits in respect of each other and are interconnected by a threaded connection (31, 32),
**characterized** in that the end of the adjustment bushing (26) remote from the front part (24) abuts on the transmission ratio disc (6) and is guided in the control housing (10), while being fixed against rotation, so that a variation of the axial length of the valve piston (16) is possible when the brake power booster is assembled.

2. A vacuum brake power booster as claimed in claim 1,
**characterized** in that the adjustment bushing (26) is formed with an axially extending groove (34) which accommodates a ridge (35) being configurated at the control housing (10).

3. A vacuum brake power booster as claimed in claim 1,
**characterized** in that the adjustment bushing (26) is formed with a flat which interacts with a surface shaped at the control housing (10).

4. A vacuum brake power booster as claimed in claim 1,
**characterized** in that the adjustment bushing (26) is configurated in the shape of a square section, which is accommodated in a square opening being formed in the control housing (10).

5. A vacuum brake power booster as claimed in claim 1,
**characterized** in that the threaded connection (31, 32) is furnished with a safeguard against loosening.

6. A vacuum brake power booster as claimed in claim 1,
**characterized** in that the threaded connection (31, 32) is designed as an irreversible thread.

7. A vacuum brake power booster as claimed in claim 6,
**characterized** in that the front part (24) and the adjustment bushing (26) are provided with threads (31, 32) of different pitch.

8. A vacuum brake power booster as claimed in claim 6,
**characterized** in that the front part (24) and the adjustment bushing (26) are provided with threads (31, 32) having different flank angles.

9. A vacuum brake power booster as claimed in claim 5,
**characterized** in that the adjustment bushing (26) is furnished with radial impressions (27).

10. A vacuum brake power booster as claimed in claim 5,
**characterized** in that the adjustment bushing (26) is designed as a self-locking nut.

11. A vacuum brake power booster as claimed in claim 5,
**characterized** in that the threaded connection (31, 32) is provided with microencapsulated adhesive.

12. A vacuum brake power booster as claimed in claim 5,
**characterized** in that the threaded connection (31, 32) is provided with a varnish locking coating.

13. A vacuum brake power booster as claimed in claim 5,
**characterized** in that the safeguard against loosening is provided in the shape of a counter nut (43) which is axially supported at the front part (24).

14. A vacuum brake power booster as claimed in claim 13,
**characterized** in that the front part (24) is formed with an axial through bore (44) which is adapted to be closed by a sealing plug (45).

15. A vacuum brake power booster as claimed in claim 1,
**characterized** in that the adjustment bushing (26) is designed one-part with the transmission ratio disc (6).

16. A vacuum brake power booster as claimed in claim 1,
**characterized** in that, at its end facing the piston rod (13), the front part (24) of the valve piston (16) is furnished with slots (42) or, respectively, cutouts, which serve to accommodate an adjustment tool (55) being determined for turning the valve piston.

17. A vacuum brake power booster with a booster housing (7) which is divided into a sealed vacuum chamber (20) and a working chamber (23) by an axially movable wall (62), to which a pneumatic pressure differential can be applied, and with a control valve (1, 9, 12) which controls the pressure differential, is positioned within a control housing (10) and is actuatable by a valve piston (16), the valve piston (16) which is slidable by means of a piston rod (13) being in force-transmitting connection, through a transmission ratio disc (6) and an elastic reaction disc (30), with a force output member (push rod 29), and being formed by a front part (24), interacting with the piston rod (13), and a second part (46) axially abutting on the reaction disc (30) that is furnished with a step (48) which abuts axially on an annular surface (47) provided on the front part (24),
**characterized** in that the second part is formed by a force transmission pin (46), which is sealedly guided in the front part (24) and which is provided at its end facing the piston rod (13) with an axial recess (49) having a V-shaped cross section and accommodating the end of the piston rod (13).

18. A vacuum brake power booster as claimed in claim 17,
**characterized** in that the force transmission pin (46) is designed such that its axial length can be modified before installation.

19. A vacuum brake power booster as claimed in anyone of claims 1 to 18,
**characterized** in that the front part (24) is formed with a radial groove (50) which accommodates an elastic ring-shaped piston rod holder (51).

20. A process for the adjustment of the axial distance between the transmission ratio disc (6) and the reaction disc (30) in a vacuum brake power booster as claimed in anyone of the preceding claims 1 to 16,
**characterized** in that
a) the vacuum chamber (20) is connected to a vacuum source in such a manner that the operating pressure prevails in the booster housing (7) which develops in the inactive position of the vacuum brake power booster, whereupon
b) a previously defined input force is transmitted to the valve piston (16), while the output force is measured simultaneously, and
c) in case the determined value of the output force is outside a previously defined range, the axial length of the valve piston (16) is changed until the previously defined range of the output force is reached.

21. A process as claimed in claim 20,
**characterized** in that the modification of the length of the valve piston (16) takes place by a relative movement of its parts (24, 26) in respect of each other, in particular by rotating the front part (24) in respect of the adjustment bushing (26), and in that the front part (24) and the adjustment bushing (26) are fixed in their adjusted position as soon as the output force range is reached.

22. A process as claimed in claim 21,
**characterized** in that the front part (24) is rotated while the piston rod (13) is not incorporated.

23. A process for the adjustment of the axial distance between the transmission ratio disc and the reaction disc in a vacuum brake power booster as claimed in claim 17 or claim 18, to the vacuum chamber of which vacuum is applied and the working chamber is vented while, simultaneously, the output force is measured,
**characterized** in that
a) an input force which has been established previously is transmitted to the front part (24);
b) the required length of the force transmission pin (46) is determined by measuring the distance (l) between its surface of abutment (annular surface (47)) against the front part (24) and the transmission ratio disc (6) upon reaching a pre-established output force range; and, subsequently
c) the force transmission pin (46) having an appropriate length is introduced while being sealed off simultaneously.

24. A process as claimed in claim 23,
**characterized** in that the required length of the force transmission pin (46) is determined by inserting a measuring device which is comprised of a bushing (52) and a rod (53) being movable relative to the bushing (52), the bushing (52) being brought into engagement with the front part (24) and the rod (53) being brought into contact with the transmission ratio disc (6) due to the relative movement of the bushing (52) and the rod (53) in respect of each other under the effect of the input force, and by determining the travel being performed in the event of the relative movement of the bushing (52) in respect of the rod (53) by means of a dial gauge (54).

25. A process as claimed in claim 23 or claim 24,
**characterized** in that the axial length (l) of the force transmission pin (46) is adjusted before its introduction.

## Revendications

1. Amplificateur d'effort de freinage à dépression, comprenant un boîtier d'amplificateur (7), qui est divisé d'une manière étanche en une chambre à dépression (20) et une chambre de travail (23) au moyen d'une cloison (62) mobile axialement et agencée de façon à pouvoir être soumise à l'action d'une pression pneumatique différentielle, et une valve de commande (1, 9, 12) commandant la pression différentielle, disposée dans un boîtier de commande (10) et agencée de façon à pouvoir être actionnée par un piston de valve (16), lequel piston de valve (16), agencé de façon à pouvoir être déplacé en translation au moyen d'une tige de piston (13), est relié, de façon à pouvoir transmettre les forces et par l'intermédiaire d'un disque de réduction (6) et d'un disque élastique de réaction (30), à un organe de sortie de force (tige de pression 29) et est constitué d'une pièce avant (24), coopérant avec la tige de piston (13), et d'une douille de réglage (26), prenant appui axialement sur le disque de réduction (6), qui sont réunies entre elles au moyen d'une liaison filetée (31, 32) de façon à pouvoir faire l'objet d'un déplacement axial limité l'une vis-à-vis de l'autre, caractérisé en ce que la douille de réglage (26) prend appui sur le disque de réduction (6) par son extrémité opposée à la pièce avant (24) et est guidée dans le boîtier de commande (10) en étant immobilisée en rotation, de sorte qu'une modification de la longueur axiale du piston de valve (16) est possible lorsque l'amplificateur d'effort de freinage est assemblé.

2. Amplificateur d'effort de freinage à dépression selon la revendication 1, caractérisé en ce que la douille de réglage (26) comporte une rainure axiale (34) qui sert à loger une nervure (35) formée sur le boîtier de commande (10).

3. Amplificateur d'effort de freinage à dépression selon la revendication 1, caractérisé en ce que la douille de réglage (26) comporte un méplat qui coopère avec une surface réalisée au formage sur le boîtier de commande (10).

4. Amplificateur d'effort de freinage à dépression selon la revendication 1, caractérisé en ce que la douille de réglage (26) est réalisée sous la forme d'un profil carré qui est logé dans une ouverture carrée réalisée au formage dans le boîtier de commande (10).

5. Amplificateur d'effort de freinage à dépression selon la revendication 1, caractérisé en ce que la jonction filetée (31, 32) est pourvue d'une sécurité antirotation.

6. Amplificateur d'effort de freinage à dépression selon la revendication 1, caractérisé en ce que la jonction filetée (31, 32) est réalisée sous la forme d'un filetage autobloquant.

7. Amplificateur d'effort de freinage à dépression selon la revendication 6, caractérisé en ce que la pièce avant (24) et la douille de réglage (26) sont pourvues de filetages (31, 32) à pas différents.

8. Amplificateur d'effort de freinage à dépression selon la revendication 6, caractérisé en ce que la pièce avant (24) et la douille de réglage (26) sont pourvues de filetages (31, 32) à angles de pression différents.

9. Amplificateur d'effort de freinage à dépression selon la revendication 5, caractérisé en ce que la douille de réglage (26) est pourvue de parties (27) repoussées dans le sens radial.

10. Amplificateur d'effort de freinage à dépression selon la revendication 5, caractérisé en ce que la douille de réglage (26) est réalisée sous la forme d'un écrou indesserrable.

11. Amplificateur d'effort de freinage à dépression selon la revendication 5, caractérisé en ce que la jonction filetée (31, 32) est pourvue d'une colle à microencapsulation.

12. Amplificateur d'effort de freinage à dépression selon la revendication 5, caractérisé en ce que la jonction filetée (31, 32) est pourvue d'un blocage de laque.

13. Amplificateur d'effort de freinage à dépression selon la revendication 5, caractérisé en ce que la sécurité antirotation est réalisée sous la forme d'un contre-écrou (43) qui prend appui axialement sur la pièce avant (24).

14. Amplificateur d'effort de freinage à dépression selon la revendication 13, caractérisé en ce que la pièce avant (24) est pourvue d'un alésage axial (44) qui la traverse de part en part et peut être obturé au moyen d'un bouchon étanche (45).

15. Amplificateur d'effort de freinage à dépression selon la revendication 1, caractérisé en ce que la douille de réglage (26) est réalisée d'une seule pièce avec le disque de réduction (6).

16. Amplificateur d'effort de freinage à dépression selon la revendication 1, caractérisé en ce qu'à son extrémité tournée vers la tige de piston (13), la pièce avant (24) du piston de valve (16) est pourvue de fentes (42) ou d'évidements qui servent à recevoir un outil de réglage prévu pour déplacer cette pièce avant en rotation.

17. Amplificateur d'effort de freinage à dépression, comprenant un boîtier d'amplificateur (7), qui est divisé d'une manière étanche en une chambre à dépression (20) et une chambre de travail (23) au moyen d'une cloison (62) mobile axialement et agencée de façon à pouvoir être soumise à l'action d'une pression pneumatique différentielle, et une valve de commande (1, 9, 12) commandant la pression différentielle, disposée dans un boîtier de commande (10) et agencée de façon à pouvoir être actionnée par un piston de valve (16), lequel piston de valve (16), agencé de façon à pouvoir être déplacé en translation au moyen d'une tige de piston (13), est relié, de façon à pouvoir transmettre les forces et par l'intermédiaire d'un disque de réduction (6) et d'un disque élastique de réaction (30), à un organe de sortie de force (tige de pression 29) et est constitué d'une pièce avant (24), coopérant avec la tige de piston (13), et d'une seconde pièce (46) qui prend appui axialement sur le disque de réaction (30) et qui comporte un épaulement (48) prenant appui axialement sur une surface annulaire (47) ménagée sur la pièce avant (24), caractérisé en ce que la seconde pièce est constituée d'un goujon d'application de force (46) qui est guidé d'une manière étanche dans la pièce avant (24) et qui, à son extrémité tournée vers la tige de piston (13), comporte un évidement axial (49) qui a une section en V et qui sert à loger l'extrémité de la tige de piston (13).

18. Amplificateur d'effort de freinage à dépression selon la revendication 17, caractérisé en ce que le goujon d'application de force (46) est réalisé d'une façon telle que sa longueur axiale peut être modifiée avant sa mise en place.

19. Amplificateur d'effort de freinage à dépression selon l'une des revendications 1 à 18, caractérisé en ce que la pièce avant (24) comporte une gorge radiale (50) qui sert à loger un organe annulaire élastique (51) de maintien de la tige de piston.

20. Procédé de réglage de la distance axiale entre le disque de réduction (6) et le disque de réaction (30) dans un amplificateur d'effort de freinage à dépression selon l'une des revendications précédentes 1 à 16, caractérisé en ce que :
a) on raccorde la chambre à dépression (20) à une source de dépression, d'une façon telle qu'il se développe dans le boîtier d'amplificateur (7) la pression de fonctionnement qui règne dans la position de repos de l'amplificateur d'effort de freinage à dépression, à la suite de quoi
b) on applique sur le piston de valve (16) une force d'entrée déterminée au préalable, tout en mesurant en même temps la force de sortie, et,
c) si la valeur relevée de la force de sortie est à l'extérieur d'un intervalle déterminé au préalable, on modifie la longueur axiale du piston de valve (16) jusqu'à ce que l'intervalle de valeurs de la force de sortie qui a été déterminé au préalable soit atteint.

21. Procédé selon la revendication 20, caractérisé en ce que la modification de la longueur du piston de valve (16) s'effectue au moyen d'un mouvement relatif de parties (24, 26) de ce piston de valve l'une vis-à-vis de l'autre, notamment en faisant tourner la pièce avant (24) vis-à-vis de la douille de réglage (26), et en ce qu'une fois que l'intervalle de valeurs de la force de sortie est atteint, la pièce avant (24) et la douille de réglage (26) sont fixées dans la position réglée.

22. Procédé selon la revendication 21, caractérisé en ce qu'on déplace en rotation la pièce avant (24) alors que la tige de piston (13) n'est pas mise en place.

23. Procédé de réglage de la distance axiale entre le disque de réduction et le disque de réaction dans un amplificateur d'effort de freinage à dépression selon l'une des revendications 17 et 20, dont la chambre à dépression est soumise à une dépression et dont la chambre de travail est remplie d'air en même temps qu'est effectuée une mesure de la force de sortie, caractérisé en ce que :
a) on applique sur la pièce avant (24) une force d'entrée déterminée au préalable,
b) on détermine la longueur nécessaire du goujon d'application de force (46) en mesurant la distance (l) de la surface (surface annulaire (47)) d'appui de ce goujon sur la pièce avant (24) vis-à-vis du disque de réduction (6) lorsqu'est atteint un intervalle de valeurs de la force d'entrée qui est déterminé au préalable, puis
c) on introduit un goujon d'application de force (46) ayant une longueur correspondante, tout en assurant en même temps l'étanchéité.

24. Procédé selon la revendication 23, caractérisé en ce qu'on détermine la longueur nécessaire du goujon d'application de force (46) en introduisant un dispositif de mesure qui est constitué d'un fourreau (52) et d'une tige (53) mobile vis-à-vis de ce fourreau (52), de sorte que, sous l'effet du mouvement relatif de la douille (52) et de la tige (53) l'une vis-à-vis de l'autre et sous l'action de la force d'entrée, la douille (52) est amenée en prise sur la pièce avant (24) et la tige (53) est amenée au contact du disque de réduction (6), tandis que la course parcourue en recul lors du mouvement relatif de la douille (52) vis-à-vis de la tige (53) est relevée au moyen d'un cadran de mesure (54).

25. Procédé selon l'une des revendications 23 et 24, caractérisé en ce que la longueur axiale (l) du goujon d'application de force (46) est réglée avant l'introduction de ce goujon.
